# EUROPÄISCHE PATENTANMELDUNG

(11) **EP 1 693 315 A1**
(43) Veröffentlichungstag der Anmeldung: **23.08.2006**
(21) Anmeldenummer: 05405206.3
(22) Anmeldetag: 22.02.2005
(51) Int. Cl.: B65D 85/10, B65D 71/00

(54) **Verpackungsfolie**

(71) Anmelder: Alcan Technology & Management Ltd., 8212 Neuhausen am Rheinfall (CH)
(72) Erfinder: Tucker, Nigel, Farrington Guerney Bristol BS39 6UA (GB); Page, Roger, Newbury Berk, RG14 7JY (GB); Broughton, Robert, Midsomer Norton Radstock BA3 4BP (GB)

(57) **Zusammenfassung**

Eine Verpackungsfolie (12) auf der Basis eines bedruckten Filmes aus orientiertem Polypropylen (OPP) oder eines Laminates aus zwei über einen Permanentkleber miteinander verbundenen Filmen aus orientiertem Polypropylen (OPP) dient zum Verpacken von wenigstens einem Gegenstand durch Umwickeln mit der Folie (12) und Siegeln der Folie (12) gegen sich selbst. Der Film/die Filme ist/sind nicht heisssiegelfähig und auf der bedruckten Seite des Filmes oder des Laminates der Verpackungsfolie (12) ist über der Bedruckung ein Heisssiegellack (18) in der Form eines Beschichtungsmusters lokal an den für die Siegelungen vorgesehenen Stellen angeordnet. Die Verpackungsfolie kann auch in den Siegeibereichen bedruckt sein, ohne dass die Bedruckung zu einer VerschleChterung der Siegeleigenschaften führt. Die Verpackungsfolie eignet sich zur Herstellung einer aus einer einzelnen Zigarettenpackungseinheit oder aus mehreren gestapelten Zigarettenpackungseinheiten gebildeten Packung.

## Beschreibung

Die Erfindung betrifft eine Verpackungsfolie auf der Basis eines bedruckten Filmes aus orientiertem Polypropylen oder eines Laminates aus zwei über einen Permanentkleber miteinander verbundenen Filmen aus orientiertem Polypropylen (OPP) zum Verpacken von wenigstens einem Gegenstand durch Umwickeln mit der Folie und Siegeln der Folie gegen sich selbst.

Herkömmliche Zigarettenpackungseinheiten in der Form von Schachteln oder Weichpackungen mit je zwanzig Zigaretten werden bei gewissen Verkaufsstellen wie z.B. Duty Free-Läden und Cash and Carry-Einkaufszentren in bedruckten Packungen zu 200 Zigaretten bzw. 10 Zigarettenpackungseinheiten angeboten. Das üblicherweise verwendete Verpackungsmaterial ist Karton oder Papier. Im letztgenannten Fall werden zehn Zigarettenschachteln als Einheit in einer Abpackmaschine wie ein Paket mit Papier umwickelt und die Papierverpackung wird mit Klebstoff fixiert. Diese Art von Packung ist allgemein unter dem Begriff "bundle pack" bekannt.

Zur Bildung dieser Packungen wurden auch schon bedruckte Kunststofffilme eingesetzt. Eine für diesen Zweck bekannte Verpackungsfolie ist ein mit einem Acrylat bzw. Acrylsäureester (AE) oder mit Polyvinylidenchlorid (PVdC) beschichteter Film aus orientiertem Polypropylen (OPP). Zur Herstellung der erforderlichen Aussenseite zu Aussenseite-, Aussenseite zu Innenseite- und Innenseite zu Innenseite-Siegelungen sind schon mit AE und PVdC beschichtete OPP-Filme eingesetzt worden. Diese Filme haben bei den mit Heizelementen ausgerüsteten Verpackungsmaschinen im Vergleich zu Standard coextrudierten OPP-Filmen niedrigere Siegeltemperaturen und haben den Vorteil, dass diese Beschichtungen nicht gegen den coextrudierten Film siegeln, mit dem die einzelnen Zigarettenpackungseinheiten umhüllt sind. Unbeschichtetes OPP mit coextrudierten Standardoberflächen kann ebenfalls eingesetzt werden, jedoch sind höhere Heisssiegeltemperaturen erforderlich, was zu einem Schrumpfen der Folie auf der Verpackungsmaschine führen kann. Spezielle Harze mit niedrigen Siegeltemperaturen können ebenfalls für eine Coextrusion zur Bildung unbeschichteter OPP-Filme eingesetzt werden. Diese Spezialharze sind jedoch teuer und können zu anderen Problemen wie z.B. zu einer schlechten Bedruckbarkeit führen. Zudem besteht die Gefahr, dass der zur Verpackung verwendete OPP-Film gegen den coextrudierten OPP-Film der Umhüllung der einzelnen Zigarettenpackungseinheiten siegelt und diese beschädigt.

Ein wesentlicher Nachteil der herkömmlichen Verpackungsfolien zur Herstellung von Packungen aus mehreren gestapelten Zigarettenpackungseinheiten liegt darin, dass die Siegelbereiche nicht bedruckt werden können, weil die Druckfarbe bzw. die Tinte zu einer Verschlechterung der Siegeleigenschaften führt.

Der Erfindung liegt die Aufgabe zugrunde, eine Verpackungsfolie der eingangs genannten Art derart auszugestalten, dass die Bedruckung der Siegelbereiche nicht zu einer Verschlechterung der Siegeleigenschaften führt.

Zur erfindungsgemässen Lösung der Aufgabe führt, dass der Film/die Filme nicht heisssiegelfähig ist/sind und auf der bedruckten Seite des Filmes oder des Laminates der Verpackungsfolie über der Bedruckung ein Heisssiegellack in der Form eines Beschichtungsmusters lokal an den für die Siegelungen vorgesehenen Stellen angeordnet ist.

Als Heisssiegellack für das Beschichtungsmuster eignen sich beispielsweise Acrylate bzw. Acrylsäureester (AE), Polyvinylidenchlorid (PVdC) oder ein Ethylen-Vinylacetat (EVA)-Copolymer. Die verwendeten Heisssiegellacke sind untereinander heisssiegelfähig.

Unter dem Begriff "OPP-Film" werden hier sowohl reine OPP-Filme als auch OPP-Filme mit coextrudierten Oberflächenschichten aus Co- und Terpolymeren des Propylens (P) mit z.B. Ethylen (E) und/oder Vinylacetat (VA) und anderen Monomeren verstanden. OPP-Filme mit derartigen coextrudierten Obertlächenschichten weisen gegenüber reinen OPP-Filmen niedrigere Heisssiegeltemperaturen auf. OPP-Filme ohne coextrudierte Oberflächenschichten werden generell als nicht siegelfähig bezeichnet, wenn sie bei den erforderlichen Siegeltemperaturen bereits schrumpfen. OPP-Filme werden als siegelfähig bezeichnet, wenn sie bei den erforderlichen Temperaturen nicht schrumpfen.

Der OPP-Film oder das OPP-Laminat kann einseitig oder beidseitig bedruckt sein. Die OPP-Filme können durchsichtig, opak oder metallisiert sein.

Bevorzugt ist das Beschichtungsmuster aus Heisssiegellack als Registerdruck auf die Bedruckung aufgetragen.

Das bevorzugte Verwendungsgebiet der erfindungsgemässen Verpackungsfolie ist die Herstellung einer aus einem einzelnen Gegenstand oder aus mehreren gestapelten Gegenständen gebildeten Packung, insbesondere die Herstellung einer aus einer einzelnen Zigarettenpackungseinheit oder aus mehreren gestapelten Zigarettenpackungseinheiten gebildeten Packung.

Weitere Vorteile, Merkmale und Einzelheiten der erfndungsgemässen Verpackungsfolie ergeben sich aus der nachfolgenden Beschreibung bevorzugter Ausführungsbeispiele sowie anhand der Zeichnung; diese zeigt schematisch in
- Fig. 1 die Schrägsicht auf eine Zigaretten-Grosspackung;
- Fig. 2 ein Verpackungsfolienzuschnitt zur Herstellung der Zigaretten-Grosspackung von Fig. 1;
- Fig. 3 einen Schnitt durch den Verpackungsfoüenzuschnitt von Fig. 2 nach deren Linie I-I.

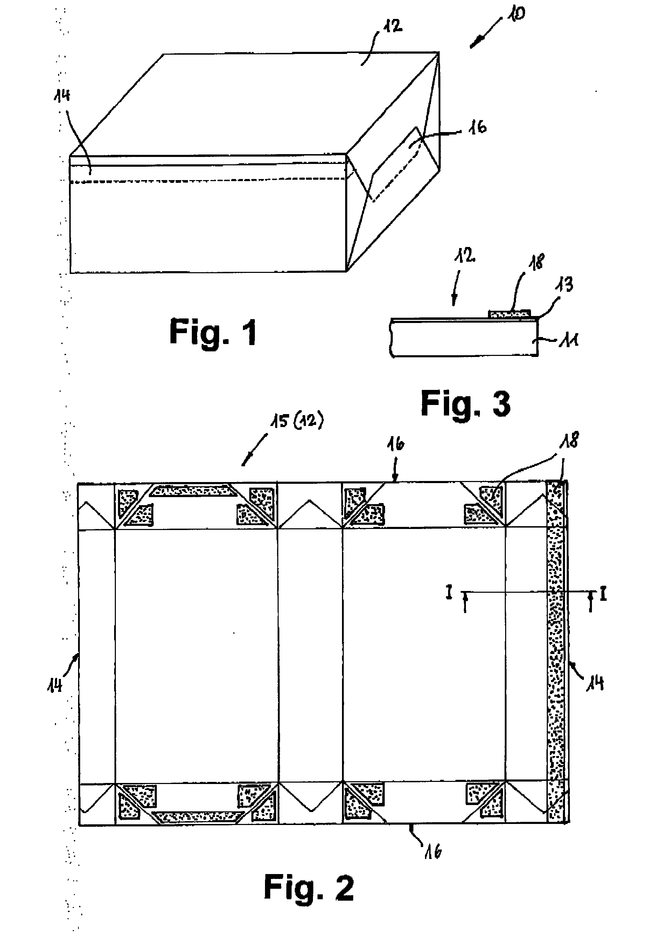

Eine in Fig. 1 dargestellte Packung 10 mit mehreren Zigarettenpackungseinheiten besteht aus einer bedruckten Verpackungsfolie 12 aus einem OPP-Film 11 oder einem Laminat aus zwei über einen Permanentkleber miteinander verbundenen OPP-Filmen. Die Packung 10 ergibt sich bei einem zur Herstellung der Packung benötigten Zuschnitt 15 aus der Verpackungsfolie 12 aus einer in einem Randbereich 14 überlappenden Wicklung eines in der Zeichnung nicht gezeigten Stapels aus einzelnen Zigarettenpackungseinheiten mit der Verpackungsfolie 12 und durch überlappendes Einschlagen der Verpackungsfolie 12 an zwei einander gegenüberliegenden Seiten 16 des Stapels aus einzelnen Zigarettenpackungseinheiten. In den Überlappungszonen im Randbereich 14 und an den Seiten 16 der Packung 10 ist die Verpackungsfolle 12 gegen sich selbst heissgesigelt.

Der in Fig. 2 gezeigte Zuschnitt 15 aus der Verpackungsfolie 12 ist zur Herstellung der Packung 10 von Fig. 1 vorgesehen. Die aus einem nicht heisssiegelfähigen OPP-Film 11 aufgebaute Verpackungsfolie 12 ist einseitig mit einer Bedruckung 13 versehen. An den zur Siegelung vorgesehenen Stellen ist der bedruckte Film 11 mit einem Heisssiegellack 18 in der Form eines Musters beschichtet. Hierbei ist der Heisssiegellack 18 auf die Bedruckung 13 aufgetragen.

## Patentansprüche

1. Verpackungsfolie auf der Basis eines bedruckten Filmes (11) aus orientiertem Polypropylen (OPP) oder eines Laminates aus zwei über einen Permanentkleber miteinander verbundenen Filmen (11) aus orientiertem Polypropylen (OPP) zum Verpacken von wenigstens einem Gegenstand durch Umwickeln mit der Folie (12) und Siegeln der Folie (12) gegen sich selbst,
**dadurch gekennzeichnet, dass**
der Film/die Filme (11) nicht heisssiegelfähig ist/sind und auf der bedruckten Seite des Filmes (11) oder des Laminates der Verpackungsfolie (12) über der Bedruckung (13) ein Heisssiegellack (18) in der Form eines Beschichtungsmusters lokal an den für die Siegelungen vorgesehenen Stellen angeordnet ist.

2. Verpackungsfolie nach Anspruch 1, **dadurch gekennzeichnet, dass** der Film/die Filme (11) auf wenigstens einer Seite bedruckt ist/sind.

3. Verpackungsfolie nach Anspruch 1 oder 2, **dadurch gekennzeichnet, dass** der Film/die Filme (11) durchsichtig, opak oder metallisiert ist/sind.

4. Verpackungsfolie nach einem der Ansprüche 1 bis 3, **dadurch gekennzeichnet, dass** das Beschichtungsmuster aus dem Heisssiegellack (18) als Registerdruck auf die Verpackungsfolie (12) aufgetragen ist.

5. Verwendung einer Verpackungsfolie nach einem der Ansprüche 1 bis 4 zur Herstellung einer aus einem einzelnen Gegenstand oder aus mehreren gestapelten Gegenständen gebildeten Packung (10).

6. Verwendung einer Verpackungsfolie nach einem der Ansprüche 1 bis 4 zur Herstellung einer aus einer einzelnen Zigarettenpackungseinheit oder aus mehreren gestapelten Zigarettenpackungseinheiten gebildeten Packung (10).
